# EUROPEAN PATENT APPLICATION

(11) **EP 2 333 150 A1**
(43) Date of publication of application: **15.06.2011**
(21) Application number: 09817433.7
(22) Date of filing: 25.09.2009
(51) Int. Cl.: D06P 5/00, B41J 2/01, B41M 5/00, C09D 11/00, D06P 5/20, D06P 5/22

(54) **INK COMPOSITION FOR INKJET TEXTILE PRINTING AND INKJET TEXTILE PRINTING METHOD**

(30) Priority: 01.10.2008 JP 2008256225; 01.10.2008 JP 2008256224
(71) Applicant: Mimaki Engineering Co., Ltd., Tomi-shi, Nagano 389-0512 (JP)
(72) Inventor: YAMADA, Ryuji, Tomi-City Nagano 389-0512 (JP)
(74) Representative: Gendron, Vincent Christian
(86) International application number: PCT/JP2009/004873
(87) International publication number: WO 2010/038390

(57) **Abstract**

[PROBLEMS] To provide a method of inkjet textile printing which eliminates needs for steaming treatment and washing treatment which are inevitable in a conventional method of inkjet textile printing.

[MEANS FOR SOLVING THE PROBLEMS] A method of inkjet textile printing using an aqueous ink, comprising:
an ejection step of ejecting said aqueous ink relative to a textile medium in an inkjet method; and
a microwave radiation step of radiating microwaves to said textile medium having said aqueous ink ejected thereon, wherein
said aqueous ink contains:
water; an anionic dye including an acid dye or a reactive dye; a polyhydric alcohol; and
a compound having a behavior of promoting the fixing of coloring agent relative to said textile medium when said textile medium having the ink ejected thereon is irradiated with microwaves.

## Description

### TECHNICAL FIELD

The present invention relates to an ink composition for inkjet textile printing and a method of inkjet textile printing using the ink composition for inkjet textile printing.

### BACKGROUND ART

Inkjet printing is a method comprising scattering small droplets of ink to a printable medium such that the droplets adhere to the printable medium.
In a method of inkjet textile printing in which this inkjet printing method is applied for textile printing, small droplets of ink are ejected to scatter relative to any of various kinds of textile media (such as a natural fiber cloth or a synthetic fiber cloth) which has been pretreated (even in case of a natural fiber cloth, pretreatment is necessary) so that the droplets adhere to the textile medium, whereby various kind of images having excellent gradation property and multicolor reproduction property can be easily formed on the textile medium of various kind (see, for example, Patent document 1).

### SUMMERY OF THE INVENTION

### PROBLEMS TO BE SOLVED BY THE INVENTION

As the ink used in the inkjet printing process, there is known an ink in which a water-soluble dye is dissolved in water. As the water-soluble dye, a direct dye, an acidic dye, a reactive dye, and the like may be used (for example, see Patent document 2).

By the way, in the method of inkjet textile printing, as post-treatments, a steaming treatment for fixing and developing the coloring agent and a washing treatment should be carried out after the inkjet textile printing on any of various kinds of textile media (natural or synthetic fiber cloth or the like) (for example, see Patent documents 1-2).
Equipment for conducting the steaming treatment or the washing treatment requires an installation space as large as a large inkjet printer and is also expensive.
In the conventional method, the dyeing is achieved by ejecting a generous amount of ink to a textile medium so that the textile is enough dyed and then washing away extra dye. Accordingly, the washing treatment makes production of colored drainage water inevitable. On the other hand, if the ejection of a generous amount of ink to a textile medium is cut off, that is, the ejection amount of ink to the textile medium is reduced, sufficient dyeing is difficult.
Patent document 1: JP2007-119657A
Patent document 2: JP2005-213484A

It is an object of the present invention to provide a method of inkjet textile printing which eliminates the needs for the steaming treatment and the washing treatment which are inevitable in the conventional method of inkjet textile printing.
It is another object of the present invention to provide an ink composition for inkjet textile printing which eliminates the needs for the steaming treatment and the washing treatment which are inevitable in the conventional method of inkjet textile printing.

### MEANS FOR SOLVING THE PROBLEMS

The inventor of the present invention intensely studied and found that the aforementioned objects can be achieved by means of interaction among a textile medium, microwave radiation, and an ink composition and invented a first invention of the present invention.
The inventor also found that the aforementioned objects can be effectively achieved by aqueous ink containing a compound having a behavior of promoting the fixing of a coloring agent relative to the textile medium when the textile medium having the aqueous ink ejected thereon is irradiated with microwaves and invented the first invention of the present invention.
Further, the inventor found that the aforementioned objects can be effectively achieved by previously applying (for example, coating) a compound to the textile medium by a pretreatment, wherein the compound is capable of discharging (generating) a compound having a behavior of promoting the fixing of a coloring agent relative to the textile medium when the textile medium having aqueous ink ejected thereon is irradiated with microwaves.
Furthermore, the inventor found that the aforementioned objects can be effectively achieved by means of interaction among a textile medium, microwave radiation, and an ink composition when the aforementioned textile medium is made of natural fibers, or synthetic fibers or semi-synthetic fibers having a cationic group.
As the compound having a behavior of promoting the fixing of the coloring agent relative to the textile medium when the textile medium having aqueous ink ejected thereon is irradiated with microwaves, a compound capable of releasing ammonia, especially a water-soluble compound containing urea or urea derivative, may be used.
Moreover, the inventor found out that moisture and urea have great influence on the microwave treatment for fixing the aqueous ink relative to the textile medium. Then, the inventor found out that the use of urea promotes the fixing of dye so that no colored drainage water is produced even with the washing treatment.

The first invention has the following structure.

### (Arrangement 1)

A method of inkjet textile printing using an aqueous ink, comprising:
an ejection step of ejecting said aqueous ink relative to a textile medium in an inkjet method; and
a microwave radiation step of radiating microwaves to said textile medium having said aqueous ink ejected thereon, wherein
said aqueous ink contains:
   water; an anionic dye including an acid dye or a reactive dye; a polyhydric alcohol; and
   a compound having a behavior of promoting the fixing of coloring agent relative to said textile medium when said textile medium having the ink ejected thereon is irradiated with microwaves.

### (Arrangement 2)

A method of inkjet textile printing using an aqueous ink, comprising:
an ejection step for ejecting said aqueous ink relative to a textile medium in an inkjet method; and
a microwave radiation step of radiating microwaves to said textile medium having said aqueous ink ejected thereon, wherein
said aqueous ink contains:
   water, an anionic dye including an acid dye or a reactive dye, and a polyhydric alcohol, and wherein
   a compound capable of releasing a compound having a behavior of promoting the fixing of coloring agent relative to said textile medium when said textile medium having the ink ejected thereon is irradiated with microwaves is previously applied to the textile medium as a pretreatment.

### (Arrangement 3)

A method of inkjet textile printing according to the arrangement 1 or 2, wherein the compound having the behavior of promoting the fixing of coloring agent relative to said textile medium when microwaves are radiated to said textile medium having the ink ejected thereon is a compound capable of releasing ammonia.

### (Arrangement 4)

A method of inkjet textile printing according to the arrangement 3, wherein the compound capable of releasing ammonia is a compound containing urea or a derivative of urea.

### (Arrangement 5)

A method of inkjet textile printing according to any one of the arrangements 2 through 4, wherein said textile medium is cotton or a textile medium having a cationic group.

### (Arrangement 6)

A method of inkjet textile printing according to any one of arrangement 1 through 4, wherein said textile medium is a textile medium made of natural fibers, synthetic fibers or semi-synthetic fibers having a cationic group.

### [EFFECT OF THE INVENTION]

According to the first invention of the present invention, it is possible to provide a method of inkjet textile printing which eliminates the needs for the steaming treatment and the washing treatment which are inevitable in the conventional method of inkjet textile printing.

Hereinafter, the first invention will be described in detail.
The method of inkjet textile printing of this invention is a method of inkjet textile printing using an aqueous ink, comprising:
an ejection step of ejecting said aqueous ink relative to a textile medium in an inkjet method; and
a microwave radiation step of radiating microwaves to said textile medium having said aqueous ink ejected thereon, wherein
said aqueous ink contains:
   water; an anionic dye including an acid dye or a reactive dye; a polyhydric alcohol; and
   a compound having a behavior of promoting the fixing of coloring agent relative to said textile medium when said textile medium having the ink ejected thereon is irradiated with microwaves (Arrangement 1).
In the invention according to the aforementioned arrangement 1, it can provide a method of inkjet textile printing which eliminates the needs for the steaming treatment and the washing treatment which are inevitable in the conventional method of inkjet textile printing.
In the invention according to the aforementioned arrangement 1, the behavior of promoting the fixing of coloring agent relative to the textile medium by radiation of microwaves is brought out by means of interaction among the textile medium, the microwave radiation, and the ink composition, thereby obtaining the aforementioned works and effects.
In the invention according to the aforementioned arrangement 1, the compound having a behavior of promoting the fixing of coloring agent relative to the textile medium when the textile medium having the ink ejected thereon is irradiated with microwaves (when microwaves are radiated or during radiation of microwaves) must be a compound actually having a behavior of promoting the fixing of a coloring agent relative to a textile medium. If the compound does not actually have the behavior of promoting the fixing a coloring agent relative to a textile medium, i.e. this behavior is not enough, it is impossible to reduce the colored drainage water so that it is impossible to eliminate the water treatment.
In the invention according to the arrangement 1, as the compound having a behavior of promoting the fixing of coloring agent relative to the textile medium when the textile medium having the ink ejected thereon is irradiated with microwaves, a compound capable of achieving print quality equal to or more than that of inkjet textile printing on cotton, silk or the like is preferably used.
In the invention according to the arrangement 1, when "the behavior of promoting the fixing of coloring agent relative to the textile medium" brought out by means of interaction among the textile medium, the microwave radiation, and the ink composition is so great, no colored drainage water is produced even with the washing treatment. That is, the coloring agent contained in the ink on the textile medium is nearly completely fixed to the textile medium.
In the invention according to the arrangement 1, the compound having a behavior of promoting the fixing of coloring agent relative to the textile medium when the textile medium having the ink ejected thereon is irradiated with microwaves is preferably a compound capable of achieving elimination of the water treatment.
In the invention according to the arrangement 1, the textile medium is preferably made of natural fibers, synthetic fibers or semi-synthetic fibers having a cationic group (Arrangement 6).

A method of inkjet textile printing of the present invention is a method of inkjet textile printing using an aqueous ink, comprising:
an ejection step for ejecting said aqueous ink relative to a textile medium in an inkjet method; and
   a microwave radiation step of radiating microwaves to said textile medium having said aqueous ink ejected thereon, wherein
   said aqueous ink contains:
   water, an anionic dye including an acid dye or a reactive dye, and a polyhydric alcohol, and wherein
   a compound capable of releasing a compound having a behavior of promoting the fixing of coloring agent relative to said textile medium when said textile medium having the ink ejected thereon is irradiated with microwaves is previously applied to the textile medium as a pretreatment (Arrangement 2).
In the invention according to the aforementioned arrangement 2, it can provide a method of inkjet textile printing which eliminates the needs for the steaming treatment and the washing treatment which are inevitable in the conventional method of inkjet textile printing.
In the invention according to the aforementioned arrangement 2, the behavior of promoting the fixing of coloring agent relative to the textile medium by radiation of microwaves is brought out by means of interaction among the textile medium which was previously treated by the predetermined pretreatment, the microwave radiation, and the ink composition, thereby obtaining the aforementioned work and effect.
In the invention according to the aforementioned arrangement 2, the compound having a behavior of promoting the fixing of coloring agent relative to the textile medium when the textile medium having the ink ejected thereon is irradiated with microwaves (when microwaves are radiated or during radiation of microwaves) must be a compound capable of sufficiently releasing a compound actually having a behavior of promoting the fixing of a coloring agent relative to a textile medium. If the compound does not sufficiently release a compound actually having a behavior of promoting the fixing a coloring agent relative to a textile medium, it is impossible to reduce the colored drainage water so that it is impossible to eliminate the water treatment.
In the invention according to the arrangement 2, as the compound capable of releasing a compound having a behavior of promoting the fixing of coloring agent relative to the textile medium when the textile medium having the ink ejected thereon is irradiated with microwaves, a compound capable of achieving print quality equal to or more than that of inkjet textile printing on cotton, silk or the like is preferably used.
In the invention according to the arrangement 2, when "the behavior of promoting the fixing of coloring agent relative to the textile medium" brought out by means of interaction among the textile medium which was previously treated by the predetermined pretreatment, the microwave radiation, and the ink composition is so great, no colored drainage water is produced even with the washing treatment. That is, the coloring agent contained in the ink on the textile medium is nearly completely fixed to the textile medium.
In the invention according to the arrangement 2, the compound capable of releasing a compound having a behavior of promoting the fixing of coloring agent relative to the textile medium when the textile medium having the ink ejected thereon is irradiated with microwaves is preferably a compound capable of achieving elimination of the water treatment.
In the invention according to the arrangement 2, the textile medium to be previously treated by the predetermined pretreatment is preferably made of cotton, or natural fibers or synthetic fibers having a cationic group (Arrangement 5).

In the method of inkjet textile printing of the present invention, the compound having the behavior of promoting the fixing of coloring agent relative to the textile medium when microwaves are radiated to the textile medium having the ink ejected thereon is preferably a compound capable of releasing ammonia (Arrangement 3).
According to the invention of the aforementioned arrangement 3, the following effects are obtained.
(1) By adding the compound capable of releasing ammonia, especially, a water-soluble compound containing urea or derivative of the same into the ink composition for inkjet textile printing, the behavior of promoting the fixing of coloring agent relative to the textile medium when irradiated with microwaves is brought out by means of interaction among the predetermined textile medium, the microwave radiation, and the ink composition, thereby increasing the fixing strength of coloring agent relative to the textile medium and thickening the color because of increase in amount of coloring agent fixed to the textile medium, compared to a case without radiation of microwaves or a case where the ink composition does not contain the compound capable of releasing ammonia.
(2) By previously applying the compound capable of releasing ammonia (for example, a water-soluble compound containing urea or derivative of the same) on the textile medium by the pretreatment, the behavior of promoting the fixing of coloring agent relative to the textile medium having the ink ejected thereon when irradiated with microwaves is brought out by means of interaction among the predetermined textile medium, the microwave radiation, and the ink composition, thereby increasing the fixing strength of coloring agent relative to the textile medium and thickening the color because of increase in amount of coloring agent fixed to the textile medium, compared to a case without radiation of microwaves or a case where the compound capable of releasing ammonia is not applied.
(3) By the interaction among the textile medium, the microwave radiation, and the ink composition, it is possible to fix the entire amount of the coloring agent contained in the ink ejected onto the textile medium even when the amount of ink is relatively small, that is, the amount of coloring agent per a unit amount of the textile medium is small, compared to a case without radiation of microwaves or without using the compound capable of releasing ammonia or a case using a conventional method (for example, the method disclosed in the aforementioned Patent documents 1 and 2). Because of this behavior, it is possible to fix the coloring agent and develop the color of the coloring agent similarly or better even with relatively small amount of ink, compared to a case without radiation of microwaves or without using the compound capable of releasing ammonia or a case using a conventional method.
   In the present invention, it is possible to fix substantially the entire amount of the coloring agent contained in the ink ejected onto the textile medium. Therefore, no colored drainage water is produced even with the washing treatment.
(4) Based on the results of the aforementioned (1)-(3), the steaming treatment for fixing and developing the coloring agent becomes not required.
(5) It is innovative because no colored drainage water is produced even when the water treatment is conducted. The present invention requires no water treatment.

In the present invention as mentioned above, the compound capable of releasing ammonia is preferably a compound which releases ammonia when irradiated with microwaves.
This is because the aforementioned works and effects (1)-(5) are significantly brought out.
As the compound capable of releasing ammonia, urea or a derivative of urea (a compound containing carbamide group) may be employed.

In the present invention, the compound capable of releasing ammonia is preferably urea or a derivative of urea (a compound containing carbamide group) (Arrangement 4).

This is because the aforementioned works and effects (1)-(5) are significantly brought out.

As the urea or the derivative of urea (compound containing carbamide group), for example, urea, dimethy urea, monomethylthio urea, thio urea, alkyl urea such as dimethylthio urea, and alkylthio urea may be employed. Among these, a compound capable of releasing a large amount of ammonia such as urea and having a high ammonia releasing efficiency is preferable.
The content of urea or a derivative of urea (a compound containing carbamide group) is not limited to any specific value, but is preferably 1-30 weight %, more preferably 5-20 weight % relative to the entire weight of the ink composition.

In the invention according to the arrangement 2, the aforementioned compound capable of releasing ammonia when microwaves are radiated to the textile medium having ink ejected thereon is previously applied to the textile medium by the pretreatment (Arrangement 3, Arrangement 4).

The ink composition for inkjet textile printing used in the invention according to the arrangement 1 contains the aforementioned compound capable of releasing ammonia (for example, a water-soluble compound containing urea or a derivative of urea) (Arrangement 3, Arrangement 4).

The ink composition for inkjet textile printing used in the present invention contains polyhydric alcohols solvent (Arrangement 1, Arrangement 2).
This is because the polyhydric alcohols solvent may help the exhibition of the aforementioned works and effects (1)-(5). In addition, it is preferable to contain a water-soluble solvent such as a polyhydric alcohols solvent because of less solvent odor compared to a solvent ink.

As the polyhydric alcohol, a polyhydric alcohol of which boiling point at the normal pressure is 150°C or more is preferable. Examples of the polyhydric alcohol may include ethylene glycol, diethylene glycol, triethylene glycol, tetraethylene glycol, propylene glycol, diepropylene glycol, tripropylene glycol, polyethylene glycol having molecular weight of 2,000 or less, 1,3-propylene glycol, isopropylene glycol, isobutylene glycol, 1,4-butanediol, 1,3-butanediol, 1,2-pentanediol, 1,5-pentanediol, 1,2-hexanediol, 1,6-hexanediol, 1,2,6-hexanetriol, 1,8-octanediol, 1,2-octanediol, mesoerythritol, pentaerythritol, and thioglycol. Among the polyhydric alcohols, polyhydric alcohols of ethylene glycol type such as ethylene glycol, diethylene glycol, triethylene glycol, and tetraethylene glycol are especially preferable.
The content of the polyhydric alcohol is not limited to any specific value, but is preferably 1-40 weight %, more preferably 3-20 weight % relative to the entire weight of the ink composition.

In the ink composition used in the present invention, the water may be any water, but is preferably pure water. Pure water can be prepared easily by ion exchange or distillation.
In addition, it is preferable to sterilize the pure water by means of ultraviolet light.
The content of the water is not limited to any specific value, but is preferably 5-70 weight %, more preferably 10-60 weight % relative to the entire weight of the ink composition from the standpoint of help of the exhibition of the aforementioned works and effects (1)-(5).

The ink composition used in the present invention preferably contains a water-soluble binder. This is because the water-soluble binder may have a behavior of helping the exhibition of the aforementioned works and effects (1)-(5).

The ink composition used in the present invention preferably contains, as the water-soluble binder, at least one selected from a group consisting of phenolic resin, urethane resin, and acrylic resin. This is because the aforementioned works and effects (1)-(5) are brought out more significantly.

The ink composition used in the present invention is an aqueous ink containing an aqueous coloring agent.
In the ink composition used in the present invention, as the anionic dye including an acid dye or a reactive dye, a known anionic dye including an acid dye or a reactive dye may be used.
Anionic dye is a generic term used to refer to dyes having anionic property and most of anionic dyes have polar groups having anionic property such as "sulfonic acid group", "carboxylic acid group" in molecule of dye. As the anionic dyes, an acid dye or a reactive dye is preferably employed.
The acid dye has acid groups having acidic property such as "sulfonic acid group", "carboxylic acid group" in molecule of dye. As the acid dye, for example, Acid Blue 9 may be employed.
The reactive dye is a dye which forms a covalent bond by reaction between fiber and dye. As the reactive dye, for example, Reactive Red 24 may be employed.

The ink composition used in the present invention may contain, as additional additives, alkylene glycol monoalkyl ether (for example, triethylene glycol mono-n-buthyl ether) and/or surfactant (for example, acetylenic glycol type surfactant) for the purpose of improving ejection stability of ink (especially, ejection stability by a piezo head).

The ink composition used in the present invention preferably contains a preservative in addition to the aforementioned components. Preferable examples of the preservative may include Proxel CRL, Proxel BDN, Proxel GXL, Proxel XL-2, Proxel IB, and Proxel TN.

The ink composition used in the present invention may further contain a chelate agent. The chelate agent traps metal ions in the ink so as to improve reliability of the ink and traps heavy metal ions on the textile medium so that it is effective in preventing dying spots. Preferable examples of the chelate agent include ethylene diamine tetra-acetate, nitrilotriacetate, hexametaphosphate, pyrophosphate, and methaphosphorate. Further, TRILON TA and DEKOL SN which are available from BASF, and Calgon T which is available from Benkiesed are excellent in biodegrability and are very suitable in terms of an environment.

In the present invention, the textile medium is a medium made of fibers. Examples of the textile medium include cloth, woven cloth, fabric, mixed fabric, fabric cloth, nonwoven cloth and the like.

The method of inkjet textile printing of the present invention is especially suitably used as a method of inkjet textile printing for printing onto a textile medium made of natural fibers, synthetic fibers or semi-synthetic fibers having a cationic group (Arrangement 6).
This is because the aforementioned works and effects (1)-(5) are greatly brought out by means of interaction among the textile medium, the microwave radiation, and the ink composition.
Examples of the natural fibers include linen, wool, and the like.
Examples of the natural fibers or the synthetic fibers having a cationic group include silk, nylon, poryurethane, and the like.
Examples of the semi-synthetic fibers include acetate fiber.

In the present invention, microwaves are radiated to the textile medium having ink ejected thereon.
As for the microwave radiation, the frequency and the radiation intensity of the microwaves are adjusted in such a manner as to increase, preferably maximize, the works and effects (1)-(5) by the microwave radiation.

Hereinafter, a second invention of the present invention will be described.
The inventor of the present invention intensely studied and found that the aforementioned objects can be achieved by means of interaction among a textile medium, microwave radiation, and an ink composition and invented the second invention of the present invention. The inventor also found that the aforementioned objects can be effectively achieved by containing a compound, having a behavior of promoting the fixing of a coloring agent relative to the textile medium when the textile medium having aqueous ink ejected thereon is irradiated with microwaves, in the aqueous ink and invented the second invention of the present invention.
Further, the inventor found that the aforementioned objects can be effectively achieved by means of interaction among a textile medium, microwave radiation, and an ink composition when the aforementioned textile medium is made of natural fibers, or synthetic fibers or semi-synthetic fibers having a cationic group.
As the compound having a behavior of promoting the fixing of the coloring agent relative to the textile medium when the textile medium having aqueous ink ejected thereon is irradiated with microwaves, a compound capable of releasing ammonia, especially a water-soluble compound containing urea structure, may be used.
Moreover, the inventor found out that moisture and urea have significant influence on the microwave treatment for fixing the aqueous ink relative to the textile medium. Then, the inventor found out that the use of urea promotes the fixing of dye so that no colored drainage water is produced even with the washing treatment.

The second invention has the following structure.

### (Arrangement 7)

An ink composition for inkjet textile printing containing:
water; an anionic dye including an acid dye or a reactive dye; a polyhydric alcohol; and
a compound having a behavior of promoting the fixing of coloring agent relative to a textile medium when said textile medium having the ink ejected thereon is irradiated with microwaves.

### (Arrangement 8)

An ink composition for inkjet textile printing according to the arrangement 7, wherein said ink composition contains a compound capable of releasing ammonia as the compound having the behavior of promoting the fixing of coloring agent relative to the textile medium.

### (Arrangement 9)

An ink composition for inkjet textile printing according to the arrangement 8, wherein said ink composition contains urea or a derivative of urea as the compound capable of releasing ammonia.

### (Arrangement 10)

An ink composition for inkjet textile printing according to any one of the arrangements 7 through 9, wherein said ink composition contains a water-soluble binder.

### (Arrangement 11)

An ink composition for inkjet textile printing according to the arrangement 10, wherein said ink composition contains, as said water-soluble binder, at least one selected from a group consisting of phenolic resin, urethane resin, and acrylic resin.

### (Arrangement 12)

An ink composition for inkjet textile printing according to any one of the arrangements 7 through 11, wherein the medium is made of natural fibers, synthetic fibers or semi-synthetic fibers having a cationic group.

### (Arrangement 13)

An ink composition for inkjet textile printing according to any one of the arrangements 7 through 12, wherein said ink composition is used in a method of inkjet textile printing comprising a step of radiating microwaves to the textile medium having ink ejected thereon.

### [EFFECT OF THE INVENTION]

According to the second invention of the present invention, it is possible to provide an ink composition for inkjet textile printing which eliminates the needs for the steaming treatment and the washing treatment which are inevitable in the conventional method of inkjet textile printing.

Hereinafter, the second invention will be described in detail.

An ink composition for inkjet textile printing of the present invention contains:
water; an anionic dye including an acid dye or a reactive dye; a polyhydric alcohol; and
a compound having a behavior of promoting the fixing of coloring agent relative to a textile medium when said textile medium having the ink ejected thereon is irradiated with microwaves (Arrangement 7).
In the invention according to the aforementioned arrangement 7, it is possible to provide an ink composition for inkjet textile printing which eliminates the needs for the steaming treatment and the washing treatment which are inevitable in the conventional method of the inkjet textile printing.
In the invention according to the aforementioned arrangement 7, the behavior of promoting the fixing of coloring agent relative to the textile medium by radiation of microwaves is brought out by means of interaction among the textile medium, the microwave radiation, and the ink composition, thereby obtaining the aforementioned works and effects.
In the invention according to the aforementioned arrangement 7, the compound having a behavior of promoting the fixing of coloring agent relative to the textile medium when the textile medium having the ink ejected thereon is irradiated with microwaves (when microwaves are radiated or during radiation of microwaves) must be a compound actually having a behavior of promoting the fixing of a coloring agent relative to a textile medium. If the compound does not actually have the behavior of promoting the fixing a coloring agent relative to a textile medium, i.e. this behavior is not enough, it is impossible to reduce the colored drainage water so that it is impossible to eliminate the water treatment.
In the invention, as the compound having a behavior of promoting the fixing of coloring agent relative to the textile medium when the textile medium having the ink ejected thereon is irradiated with microwaves, a compound capable of achieving print quality equal to or more than that of inkjet textile printing on cotton, silk or the like is preferably used.
In the invention, when "the behavior of promoting the fixing of coloring agent relative to the textile medium" brought out by means of interaction among the textile medium, the microwave radiation, and the ink composition is so great, no colored drainage water is produced even with the washing treatment. That is, the coloring agent contained in the ink on the textile medium is nearly completely fixed to the textile medium.
In the invention, the compound having a behavior of promoting the fixing of coloring agent relative to the textile medium when the textile medium having the ink ejected thereon is irradiated with microwaves is preferably a compound capable of achieving elimination of the water treatment.

An ink composition for inkjet textile printing of the present invention contains a compound capable of releasing ammonia as the compound having the behavior of promoting the fixing of coloring agent relative to the textile medium (Arrangement 8).
In the invention according to the aforementioned arrangement 8, the following works and effects are obtained.
(1) By adding the compound capable of releasing ammonia, especially, a water-soluble compound containing urea or derivative of the same into the ink composition for inkjet textile printing, the behavior of promoting the fixing of coloring agent relative to the textile medium when irradiated with microwaves is brought out by means of interaction among the predetermined textile medium, the microwave radiation, and the ink composition, thereby increasing the fixing strength of coloring agent relative to the textile medium and thickening the color because of increase in amount of coloring agent fixed to the textile medium, compared to a case without radiation of microwaves or a case where the ink composition does not contain the compound capable of releasing ammonia.
(2) By the interaction among the predetermined textile medium, the microwave radiation, and the ink composition, it is possible to fix the entire amount of the coloring agent contained in the ink ejected onto the textile medium even when the amount of ink is relatively small, that is, the amount of coloring agent per a unit amount of the textile medium is small, compared to a case without radiation of microwaves or without using the compound capable of releasing ammonia or a case using a conventional method (for example, the method disclosed in the aforementioned Patent documents 1 and 2). Because of this behavior, it is possible to fix the coloring agent and develop the color of the coloring agent similarly or better even with relatively small amount of ink, compared to a case without radiation of microwaves or without using the compound capable of releasing ammonia or a case using a conventional method.
   In the present invention, it is possible to fix substantially the entire amount of the coloring agent contained in the ink ejected onto the textile medium. Therefore, no colored drainage water is produced even with the washing treatment.
(3) Based on the results of the aforementioned (1)-(2), the steaming treatment for fixing and developing the coloring agent becomes not required.
(4) It is innovative because no colored drainage water is produced even when the water treatment is conducted. The present invention requires no water treatment.

The ink composition for inkjet textile printing of the present invention contains a compound capable of releasing ammonia (Arrangement 8).
The compound capable of releasing ammonia is preferably a compound which releases ammonia when irradiated with microwaves.
As the compound capable of releasing ammonia, urea or a derivative of urea (a compound containing carbamide group) may be employed.

In the present invention, the compound capable of releasing ammonia is preferably urea or a derivative of urea (a compound containing carbamide group) (Arrangement 9).

This is because the aforementioned works and effects (1)-(4) are significantly brought out.

As the urea or the derivative of urea (compound containing carbamide group), for example, urea, dimethyl urea, monomethylthio urea, thio urea, alkyl urea such as dimethylthio urea, and alkylthio urea may be employed. Among these, a compound capable of releasing a large amount of ammonia such as urea and having a high ammonia releasing efficiency is preferable.
The content of urea or a derivative of urea (a compound containing carbamide group) is not limited to any specific value, but is preferably 1-30 weight %, more preferably 5-20 weight % relative to the entire weight of the ink composition.

In the invention, the ink composition for inkjet textile printing used in the present invention contains polyhydric alcohols solvent (Arrangement 7).
This is because the polyhydric alcohols solvent may help the exhibition of the aforementioned works and effects (1)-(4).
In addition, it is preferable to contain a water-soluble solvent such as a polyhydric alcohols solvent because of less solvent odor compared to a solvent ink.

As the polyhydric alcohol, a polyhydric alcohol of which boiling point at the normal pressure is 150°C or more is preferable. Examples of the polyhydric alcohol may include ethylene glycol, diethylene glycol, triethylene glycol, tetraethylene glycol, propylene glycol, diepropylene glycol, tripropylene glycol, polyethylene glycol having molecular weight of 2,000 or less, 1,3-propylene glycol, isopropylene glycol, isobutylene glycol, 1,4-butanediol, 1,3-butanediol, 1,2-pentanediol, 1,5-pentanediol, 1,2-hexanediol, 1,6-hexanediol, 1,2,6-hexanetriol, 1,8-octanediol, 1,2-octanediol, mesoerythritol, pentaerythritol, and thioglycol. Among the polyhydric alcohols, polyhydric alcohols of ethylene glycol type such as ethylene glycol, diethylene glycol, triethylene glycol, and tetraethylene glycol are especially preferable.
The content of the polyhydric alcohol is not limited to any specific value, but is preferably 1-40 weight %, more preferably 3-20 weight % relative to the entire weight of the ink composition.

The ink composition of the present invention is an aqueous ink containing water.
In the ink composition of the present invention, the water may be any water, but is preferably pure water. Pure water can be prepared easily by ion exchange or distillation.
In addition, it is preferable to sterilize the pure water by means of ultraviolet light.
The content of the water is not limited to any specific value, but is preferably 5-70 weight %, more preferably 10-60 weight % relative to the entire weight of the ink composition from the standpoint of help of the exhibition of the aforementioned works and effects (1)-(4).

The ink composition of the present invention preferably contains a water-soluble binder (Arrangement 10).
This is because the water-soluble binder may have a behavior of helping the exhibition of the aforementioned works and effects (1)-(4).

The ink composition of the present invention preferably contains, as the water-soluble binder, at least one selected from a group consisting of phenolic resin, urethane resin, and acrylic resin (Arrangement 11).
This is because the aforementioned works and effects (1)-(4) are brought out more significantly.

In the ink composition of the present invention, as the anionic dye including an acid dye or a reactive dye, a known anionic dye including an acid dye or a reactive dye may be used.
Anionic dye is a generic term used to refer to dyes having anionic property and most of anionic dyes have polar groups having anionic property such as "sulfonic acid group", "carboxylic acid group" in molecule of dye. As the anionic dyes, an acid dye or a reactive dye is preferably employed.
The acid dye has acid groups having acidic property such as "sulfonic acid group", "carboxylic acid group" in molecule of dye. As the acid dye, for example, Acid Blue 9 may be employed.
The reactive dye is a dye which forms a covalent bond by reaction between fiber and dye. As the reactive dye, for example, Reactive Red 24 may be employed.

The ink composition of the present invention may contain, as additional additives, alkylene glycol monoalkyl ether (for example, triethylene glycol mono-n-buthyl ether) and/or surfactant (for example, acetylenic glycol type surfactant) for the purpose of improving ejection stability of ink (especially, ejection stability by a piezo head).

The ink composition of the present invention preferably contains a preservative in addition to the aforementioned components. Preferable examples of the preservative may include Proxel CRL, Proxel BDN, Proxel GXL, Proxel XL-2, Proxel IB, and Proxel TN.

The ink composition of the present invention may further contain a chelate agent. The chelate agent traps metal ions in the ink so as to improve reliability of the ink and traps heavy metal ions on the textile medium so that it is effective in preventing dying spots. Preferable examples of the chelate agent include ethylene diamine tetra-acetate, nitrilotriacetate, hexametaphosphate, pyrophosphate, and methaphosphorate. Further, TRILON TA and DEKOL SN which are available from BASF, and Calgon T which is available from Benkiesed are excellent in biodegrability and are very suitable in terms of an environment.

In the present invention, the textile medium is a medium made of fibers. Examples of the textile medium include cloth, woven cloth, fabric, mixed fabric, fabric cloth, nonwoven cloth and the like.

The ink composition for inkjet textile printing of the present invention is especially suitably used as an ink composition for inkjet textile printing for printing on a textile medium made of natural fibers, or synthetic fibers or semi-synthetic fibers having a cationic group (Arrangement 12).
This is because the aforementioned works and effects (1)-(4) are greatly brought out by means of interaction among the textile medium, the microwave radiation, and the ink composition.
Examples of the natural fibers include linen, wool, and the like.
Examples of the natural fibers or the synthetic fibers having a cationic group include silk, nylon, poryurethane, and the like.
Examples of the semi-synthetic fibers include acetate fiber.

The ink composition for inkjet textile printing of the present invention is especially suitable as an ink composition for inkjet textile printing used in a method of inkjet textile printing comprising a step of radiating microwaves to the textile medium having ink ejected thereon (Arrangement 13).

In the present invention, microwaves are radiated to the textile medium having ink ejected thereon.
As for the microwave radiation, the frequency and the radiation intensity of the microwaves are adjusted in such a manner as to increase, preferably maximize, the works and effects (1)-(4) by the microwave radiation.

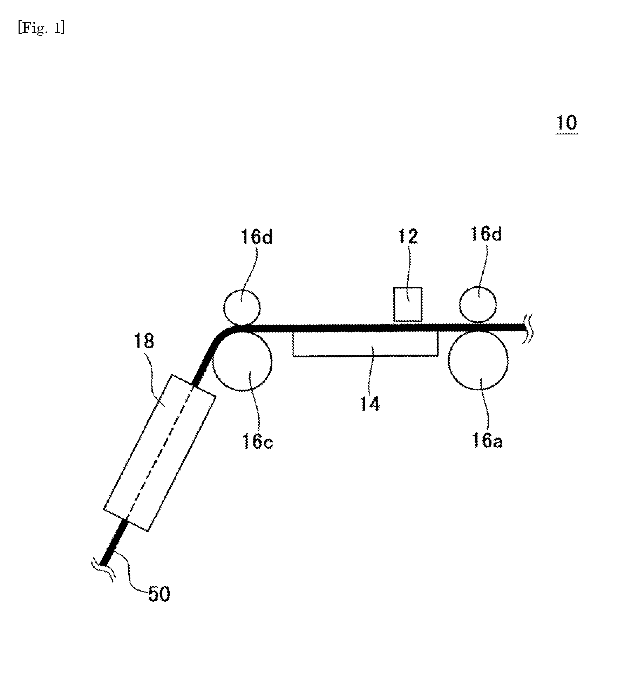

Hereinafter, an inkjet printer suitable for the present invention will be described with reference to the attached drawing. Fig. 1 shows a structural example of an inkjet printer 10 suitable for an embodiment of the present invention. The inkjet printer 10 is an inkjet printer employing an aqueous ink comprising an inkjet head 12, a platen 14, a plurality of rollers 16a-16d, and a microwave radiation section 18.

The inkjet head 12 is a print head which ejects aqueous ink to the medium 50. The inkjet head 12 moves relative to the medium 50 in predetermined main scanning direction and sub scanning direction, thereby ejecting aqueous ink to respective positions on the medium 50.

The platen 14 is a table on which the medium 50 is held so that the aqueous ink is ejected to the medium 50 by the inkjet had 12. A plurality of rollers 16a through 16d are rollers for feeding the medium 50. The plurality of rollers 16a through 16d feed the medium 50, thereby moving the inkjet head 12 relative to the medium 50 in the sub scanning direction.

The microwave radiation section 18 is disposed on the lower stream of the inkjet head 12 in the feeding direction of the medium 50 and radiates microwaves to the medium 50 having the aqueous ink ejected thereon. In the embodiment, the microwave radiation section 18 radiates microwaves onto the medium 50, for example, while passing the medium 50 inside a frame covered by wire mesh. By this radiation, the microwave radiation section 18 functions to fix the aqueous ink, ejected from the inkjet head 12, to the medium 50.

The microwave is microwave having a frequency of, for example, from 300 MHz to 30 GHz (wavelength of from 1 cm to 1 m). The microwave radiation section radiates microwaves having a frequency of from 1 to 4 GHz, preferably from 2 to 4 GHz. In addition, the microwave radiation section 18 radiates microwaves, for example, of which strength is equal to or nearly equal to that of a household microwave oven.

The microwave radiation section 18 may send air to the medium 50 while radiating microwaves. According to this arrangement, for example, it is possible to fix the aqueous ink faster. In addition, any kind of a heater may be combined with the microwave radiation section 18.

Hereinafter, examples will be described.

### (Example 1)

An inkjet printer manufactured by Mimaki Engineering Co., Ltd was used as the inkjet printer 10 to conduct printing according to Example 1. The inkjet printer used in Example 1 was of model number TX2-1600. Used as the microwave radiation section 18 was a household microwave oven instead of the microwave radiation section to be installed in the body of the inkjet printer 10.

In Example 1, an aqueous ink having the following composition was used:
1) Coloring agent: Acid Blue 9; 5 weight %
2) Urea; 15 weight %
3) Polyhydric alcohols solvent: glycerin; 5 weight %, DEG; 10 weight %
4) Water-soluble binder: JONCRYL 61; 3 weight %
5) Other: Proxel XL2; 0.1 weight %
6) Reminder: Water
The ink was prepared through normal procedures (steps).
As the medium 50, white cloth made of silk was used.

Printing according to Example 1 was conducted with using the aqueous ink (ink composition) prepared as mentioned above. In this printing, the aqueous ink was ejected to have 100% print density by the inkjet printer 10 and, after that, irradiation of the medium 50 with microwaves was conducted for two minutes by using the microwave oven. The output of the microwave oven was 600W.

### (Comparative Examples 1, 2)

Aqueous ink manufactured by Mimaki Engineering Co., Ltd was used. The model number of the used aqueous ink was SPC-0355. As the medium 50, white cloth made of silk was used.
Textile printing was conducted onto the white cloth by the inkjet printer 10. The printed matter at this stage was Comparative Example 1.
After that, the printed matter was dried at a temperature of 80°C, then kept for seven minutes in a hot steam environment of 170°C, washed with water, subjected to reduction cleaning, washed with water, and dried. The printed matter at this stage was Comparative Example 2.
As for Comparative Examples 1 and 2, it was studied whether or not there was difference between a case with microwave radiation and a case without microwave radiation. However, no clear difference was seen in the printed matters obtained as

### Comparative Examples 1 and 2.

### (Evaluation)

### (1) Color loss evaluation by wash treatment was conducted on each of the printed matters obtained in the above.

The printed matter obtained as Example 1 did not produce colored drainage water even with wash treatment.
Each of the printed matters obtained as Comparative Examples 1, 2 produced a large quantity of colored drainage water. (2) Visual evaluation was conducted on each of the printed matters obtained in the above.
The printed matter obtained as Example 1 was a beautiful printed matter without ink bleed. The printed matter obtained as Example 1 has a quality equal to that of Comparative Example 2, that is, has excellent chromaticness and color intensity (color value). (3) Evaluation using a colorimeter was conducted on each of the printed matters obtained in the above. In each of Example 1 and Comparative Example 2, single color printing with each of C, M, and Y was conducted and double-color printing with each of Y+M, M+C was conducted.
After printing, L*, a*, b* values in CIE chromaticity diagram of each of the printed results of the respective colors were obtained by the colorimeter. Here, L* means a unit indicating brightness, and a* and b* means units indicating color phase and chromaticness, respectively. Used as the colorimeter was Color Reflection Spectrodensitometer X-RITE 530LP (Model number: 530LP) manufactured by X-Rite, Incorporated (US). The results are shown in Table 1.

**[Table 1]**

| | | C | M | Y | Y+M | M+C |
|---|---|---|---|---|---|---|
| Example 1 | L* | 66.78 | 77.74 | 79.84 | 72.75 | 63.23 |
| | a* | -28.24 | 24.93 | 16.77 | 32.81 | -18.25 |
| | b* | -32.19 | -7.80 | 65.33 | 45.57 | -32.00 |
| Comparative Example 2 | L* | 61.90 | 62.74 | 75.04 | 60.64 | 53.90 |
| | a* | -19.64 | 48.01 | 23.49 | 40.20 | -1.69 |
| | b* | -34.22 | -10.32 | 73.03 | 41.66 | -34.02 |

Though the present invention has been described with regard to the embodiment, the technical scope of the present invention is not limited to the scope described in the aforementioned embodiment. It will be apparent to those skilled in the art that various modifications and improvements can be applied to the aforementioned embodiment. It is apparent from the claims of the present invention that embodiments with such modifications and improvements are within the technical scope of the present invention.

### INDUSTRIAL APPLICABILITY

The present invention can be suitably used in an inkjet printer, for example.

### BRIEF DESCRIPTION OF THE DRAWINGS

[Fig. 1] Fig. 1 is an illustration showing a structural example of an inkjet printer 10 according to an embodiment of the present invention.

### EXPLANATION OF REFERENCE SIGNS IN DRAWINGS

10... inkjet printer, 12... inkjet head, 14... platen, 16... roller, 18... microwave radiation section, 50...medium.

## Claims

1. A method of inkjet textile printing using an aqueous ink, comprising:
an ejection step of ejecting said aqueous ink relative to a textile medium in an inkjet method; and
a microwave radiation step of radiating microwaves to said textile medium having said aqueous ink ejected thereon, wherein
said aqueous ink contains:
water; an anionic dye including an acid dye or a reactive dye; a polyhydric alcohol; and
a compound having a behavior of promoting the fixing of coloring agent relative to said textile medium when said textile medium having the ink ejected thereon is irradiated with microwaves.

2. A method of inkjet textile printing using an aqueous ink, comprising:
an ejection step for ejecting said aqueous ink relative to a textile medium in an inkjet method; and
a microwave radiation step of radiating microwaves to said textile medium having said aqueous ink ejected thereon, wherein
said aqueous ink contains:
water, an anionic dye including an acid dye or a reactive dye, and a polyhydric alcohol, and wherein
a compound capable of releasing a compound having a behavior of promoting the fixing of coloring agent relative to said textile medium when said textile medium having the ink ejected thereon is irradiated with microwaves is previously applied to the textile medium as a pretreatment.

3. A method of inkjet textile printing as claimed in claim 1 or 2, wherein the compound having the behavior of promoting the fixing of coloring agent relative to said textile medium when microwaves are radiated to said textile medium having the ink ejected thereon is a compound capable of releasing ammonia.

4. A method of inkjet textile printing as claim 3, wherein the compound capable of releasing ammonia is a compound containing urea or a derivative of urea.

5. A method of inkjet textile printing as claims 2 through 4, wherein said textile medium is cotton or a textile medium having a cationic group.

6. A method of inkjet textile printing as claimed in any one of claims 1 through 4, wherein said textile medium is a textile medium made of natural fibers, synthetic fibers or semi-synthetic fibers having a cationic group.

7. An ink composition for inkjet textile printing containing:
water; an anionic dye including an acid dye or a reactive dye; a polyhydric alcohol; and
a compound having a behavior of promoting the fixing of coloring agent relative to a textile medium when said textile medium having the ink ejected thereon is irradiated with microwaves.

8. An ink composition for inkjet textile printing as claimed in claim 7, wherein said ink composition contains a compound capable of releasing ammonia as the compound having the behavior of promoting the fixing of coloring agent relative to the textile medium.

9. An ink composition for inkjet textile printing as claimed in claim 8, wherein said ink composition contains urea or a derivative of urea as the compound capable of releasing ammonia.

10. An ink composition for inkjet textile printing as claimed in any one of claims 7 through 9, wherein said ink composition contains a water-soluble binder.

11. An ink composition for inkjet textile printing as claimed in claim 10, wherein said ink composition contains, as said water-soluble binder, at least one selected from a group consisting of phenolic resin, urethane resin, and acrylic resin.

12. An ink composition for inkjet textile printing as claimed in any one of claims 7 through 11, wherein the medium is made of natural fibers, synthetic fibers or semi-synthetic fibers having a cationic group.

13. An ink composition for inkjet textile printing as claimed in any one of claims 7 through 12, wherein said ink composition is used in a method of inkjet textile printing comprising a step of radiating microwaves to the textile medium having ink ejected thereon.
